# EUROPÄISCHE PATENTANMELDUNG

(11) **EP 0 854 298 A1**
(43) Veröffentlichungstag der Anmeldung: **22.07.1998**
(21) Anmeldenummer: 97120249.4
(22) Anmeldetag: 19.11.1997
(51) Int. Cl.: F16B 21/16

(54) **Befestigungsring**

(30) Priorität: 21.01.1997 DE 19701857
(71) Anmelder: Hans Oetiker AG Maschinen- und Apparatefabrik, 8812 Horgen (CH)
(72) Erfinder: Allert, Kurt, 78727 Oberndorf (DE)
(74) Vertreter: Grosse, Rainer, Dipl.-Ing.

(57) **Zusammenfassung**

Die Erfindung betrifft einen geschlitzten Befestigungsring zur Schaffung einer formschlüssigen Verbindung durch sein bei der Montage beziehungsweise Demontage erfolgendes Zusammendrücken beziehungsweise Spreizen. Es ist vorgesehen, daß der Befestigungsring (1) aus im wesentlichen nicht federndem, kalt verformbarem Material (3) besteht, und daß die den Schlitz (9) zwischen sich bildenden Ringenden (10,11) -im nicht montierten Zustand des Befestigungsrings (1)- derart weit beabstandet zueinander liegen, daß sie für eine Montage unter plastischer Verformung aufeinander zu gebogen werden können, so daß der Befestigungsring (1) einen geschlossenen Zustand erhält, wobei durch den Biegevorgang die Ringinnenöffnung (7) eine kreisförmige beziehungsweise eine etwa kreisförmige Kontur (8) erhält.

## Beschreibung

Die Erfindung betrifft einen geschlitzten Befestigungsring zur Schaffung einer formschlüssigen Verbindung durch sein bei der Montage beziehungsweise Demontage erfolgendes Zusammendrücken beziehungsweise Spreizen.

Befestigungsringe der eingangs genannten Art sind als sogenannte Seeger-Ringe oder Benzing-Ringe bekannt. Sie dienen dazu, beispielsweise auf einer Welle oder in einer Bohrung die axiale Lage von Bauelementen zu sichern. Beim Einsetzen oder Demontieren wird der jeweilige Befestigungsring nach außen beziehungsweise nach innen gespreizt, wobei die Federkräfte den aus elastischem Material bestehenden Ring in den Grundzustand zurückbringen wollen. Der Grundzustand liegt im nicht montierten Zustand des Befestigungsrings vor. Die bekannten Befestigungsringe stellen daher Biegefedern dar, wobei hinsichtlich einer Befestigung auf einer Welle die Federungseigenschaften in axialer Richtung im wesentlichen nicht in Erscheinung treten. Die Befestigung der bekannten Ringe auf einer Welle erfolgt zum Beispiel durch ihr Eingreifen in eine Ringnut. Beim Seeger-Ring erfolgt dies durch dessen Aufspreizen mit einer Seeger-Ring-Zange und anschließendem axialen Aufschieben auf die Welle. Der Benzing-Ring läßt sich radial in die Nut der Welle unter federndem Aufspreizen einschieben.

Ferner ist es zur Schaffung einer in eine Nut einer Welle eingebrachten Axialsicherung bekannt, hierzu ein U-förmiges Bauteil zu verwenden, das mit seinen beiden Schenkeln radial auf die Welle geschoben und dann plastisch verformt wird, so daß zumindest die Endbereiche der Schenkel in zueinander konvergierenden Richtungen stehen, wodurch die radiale Sicherung gewährleistet ist. Nachteilig ist, daß diese bekannte, U-förmige Klemme nur in Teilbereiche der umlaufenden Ringnut der Welle eingreift, so daß die Aufnahme axialer Kräfte begrenzt ist.

Der Erfindung liegt die Aufgabe zugrunde, einen einfachen Befestigungsring der eingangs genannten Art zu schaffen, der einen optimalen Formschluß zum Bauteil, an dem er festgelegt wird, einnimmt und daher hoch belastbar ist.

Diese Aufgabe wird erfindungsgemäß dadurch gelöst, daß der Befestigungsring aus im wesentlichen nicht federndem, kalt verformbarem Material besteht und daß die den Schlitz zwischen sich bildenden Ringenden -im nicht montierten Zustand des Befestigungsrings- derart weit beabstandet zueinander liegen, daß sie für eine Montage unter plastischer Verformung aufeinander zu gebogen werden können, so daß der Befestigungsring einen geschlossenen Zustand erhält, wobei durch den Biegevorgang die Ringinnenöffnung eine kreisförmige beziehungsweise eine zumindest etwa kreisförmige Kontur erhält.

Im Gegensatz zu dem Seeger-Ring beziehungsweise dem Benzing-Ring besteht der Gegenstand der Erfindung somit nicht aus federndem Material, sondern aus einem Material, das beim Montieren umgeformt wird, so daß der Befestigungsring durch Zusammendrücken eine neue Gestalt erhält, die beibehalten wird. Das im Patentanspruch genannte, nicht federnde, kalt verformbare Material ist derart zu verstehen, daß eine Umformung mit Gestaltänderung möglich ist, wobei selbstverständlich eine Restfederwirkung vorhanden sein kann. Beispielsweise besteht der Befestigungsring aus nicht gehärtetem Stahl. Das Material läßt vorzugsweise eine mehrfache Umformung zu, das heißt, der montierte Befestigungsring kann durch Verformung wieder geöffnet und anschließend wieder montiert werden. Diese Vorgänge sind vorzugsweise mehrmals möglich, ohne daß es zu einem Bruch des Rings kommt. Gemäß dem Anspruch 1 erfolgt das Zusammendrücken des Rings derart, daß er einen "geschlossenen" Zustand erhält. Das Wort "geschlossen" bedeutet nicht, daß die beiden Ringenden im montierten Zustand aneinanderliegen müssen, sondern sie können zwischen sich einen Spalt bilden. Dieser Spalt ist jedoch kleiner als der zwischen den Ringenden vorhandene Spalt im nicht montierten Zustand des Befestigungsrings. Dadurch, daß nach der Montage die Ringinnenöffnung eine kreisförmige beziehungsweise etwa eine kreisförmige Kontur erhält, ist sichergestellt, daß -im Falle des Einsatzes in eine Nut einer Welle- die gesamte Ringkontur an den Nutwandungen eine Abstützung erhält, so daß problemlos hohe Axialkräfte sicher aufgenommen werden können. Gegenüber dem bekannten Seeger-Ring und/oder dem Benzing-Ring ermöglicht der erfindungsgemäße Befestigungsring aufgrund seiner gezielt vornehmbaren Umformung eine größere Eintrittstiefe in ein Bauteil, zum Beispiel die genannte Welle, so daß eine optimale Schulteranlage mit sehr hoher Haltekraft erzielt wird. Um durch das Montieren des Rings die etwa kreisförmige Kontur der Ringinnenöffnung zu erzeugen, weist die Ringinnenöffnung im nicht montierten Zustand des Befestigungsrings eine spezielle Kontur auf, die die bei der Montage erfolgende Umformung berücksichtigt, das heißt, sie ist derart gewählt und auf die vorzunehmende Umformung abgestimmt, daß sich nach der Montage diese kreisförmige beziehungsweise etwa kreisförmige Kontur einstellt.

Ferner ist es vorteilhaft, daß im Bereich der Ringenden Werkzeugansetzmittel zum Zusammendrücken beziehungsweise Spreizen des Befestigungsrings ausgebildet sind. Insbesondere können die Werkzeugansetzmittel als Durchbrüche, insbesondere Kreislöcher, ausgebildet sein. Hierdurch ist es möglich, eine bekannte Seeger-Ring-Zange zu verwenden, um die Umformung, also das Zusammendrücken oder das Spreizen des Rings, vorzunehmen. Die Kreislöcher sind -gegenüber einem entsprechenden Seeger-Ring-größer als bei einem entsprechenden Seeger-Ring ausgestaltet, da der beschriebene Umformungsvorgang relativ hohe Kräfte erfordert, die -bei einem großen Durchmesser der Kreislöcher- den Einsatz einer entsprechend kräftigen Seeger-Ring-Zange ermöglichen.

Nach einer Weiterbildung der Erfindung ist vorgesehen, daß sich die Kontur der Ringinnenöffnung -im nicht montierten Zustand- aus mehreren, ineinander übergehenden Radien zusammensetzt, wobei aneinandergrenzende Radien unterschiedlich groß sind und unterschiedlich liegende Mittelpunkte aufweisen. "Ineinander übergehen" bedeutet nicht, daß die Radien direkt aneinandergrenzen müssen (was sie jedoch können), sondern es ist auch umfaßt, daß zwischen den Radien Übergangskrümmungen liegen.

Gedanklich läßt sich der nicht montierte Befestigungsring in zwei Ringhälften unterteilen, deren jeweilige Kontur der Ringöffnung im dem Schlitz diametral gegenüberliegenden ersten Bereich des Befestigungsrings einen Radius aufweist, der ebenso groß oder etwa ebenso groß ist, wie der Radius der Ringinnenöffnung im montierten Zustand des Befestigungsrings. Ferner ist bevorzugt vorgesehen -daß sich bei jeder Ringhälfte- an den ersten Bereich ein zweiter Bereich anschließt, dessen Radius der Kontur der Ringöffnung -im nicht montierten Zustand- doppelt beziehungsweise etwa doppelt so groß ist, wie der Radius im ersten Bereich. Schließlich ist vorgesehen, daß sich -bei jeder Ringhälfte- an den zweiten Bereich ein dritter Bereich anschließt, dessen Radius der Kontur der Ringöffnung -ebenfalls im nicht montierten Zustand- so groß beziehungsweise etwa so groß ist, wie der Radius im ersten Bereich. Diese Innenöffnungskontur führt dazu, daß der montierte Befestigungsring eine Ringinnenöffnung erhält, die kreisförmig beziehungsweise etwa kreisförmig ist. Der Mittelpunkt des Radius' im ersten Bereich geht aus von einem Mittelpunkt des Rings, der -wenn dieser seiner montierten Zustand aufweist- dem dann vorliegenden Mittelpunkt der kreisförmigen Ringinnenöffnung entspricht. Der Radius des zweiten Bereichs geht von einem Mittelpunkt aus, der gegenüber dem vorgenannten Mittelpunkt versetzt liegt. Der Radius des dritten Bereiches wiederum geht von einem Mittelpunkt aus, der gegenüber den beiden vorher genannten Mittelpunkten ebenfalls versetzt liegt.

Vorteilhaft ist es ferner, wenn die minimale Breite des Schlitzes im nicht montierten Zustand des Befestigungsrings etwas größer oder ebenso groß ist, wie der doppelte Radius der Kontur der Ringinnenöffnung im ersten Bereich. Damit entspricht die genannte Breite des Schlitzes dem Durchmesser der Welle im Bereich der Nut, oder die Breite ist geringfügig größer, so daß eine radiale Zuführung des Rings in die Nut ohne ein Aufspreizen des Rings möglich ist.

Schließlich ist es vorteilhaft, wenn der Befestigungsring als Blechstanzteil hergestellt wird. Damit liegt ein einfaches und kostengünstiges Herstellungsverfahren vor.

Die Zeichnungen veranschaulichen die Erfindung anhand eines Ausführungsbeispiels und zwar zeigt:
- Figur 1: einen Befestigungsring im nicht montierten Zustand und
- Figur 2: den Befestigungsring der Figur 1 im zusammengedrückten, montierten Zustand.

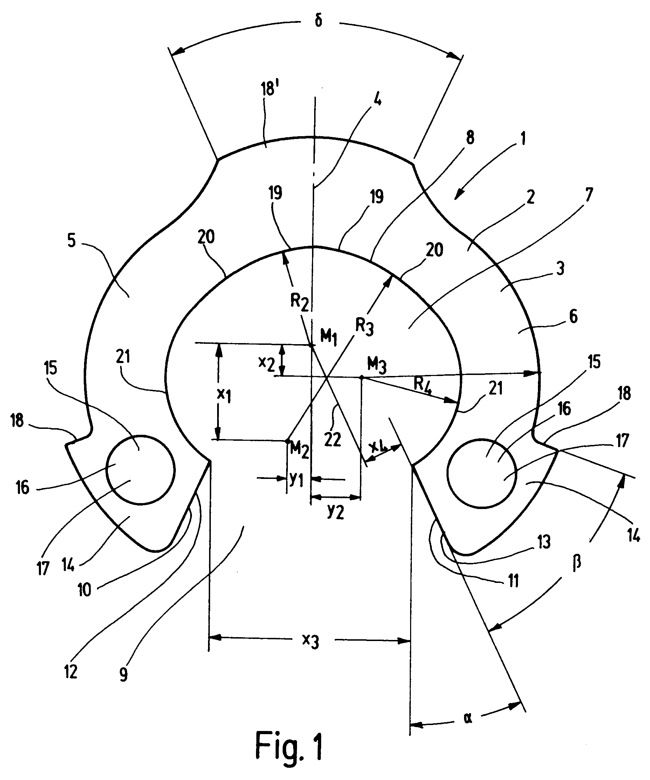

Die Figur 1 zeigt einen geschlitzten Befestigungsring 1, der als Blechstanzteil 2 ausgebildet ist. Er besteht aus einem im wesentlichen nicht federnden, kalt verformbaren Material 3.

Hinsichtlich einer gedachten Symmetrielinie 4 besteht der Befestigungsring 1 aus zwei einstückigen Ringhälften 5 und 6, die zur Symmetrielinie 4 spiegelverkehrt identisch ausgebildet sind. Im nachstehenden wird daher -der Einfachheit halber- nur noch auf eine der beiden Ringhälften 5, 6 eingegangen. Die gleichen Ausführungen gelten dann für die entsprechend andere Ringhälfte 5, 6.

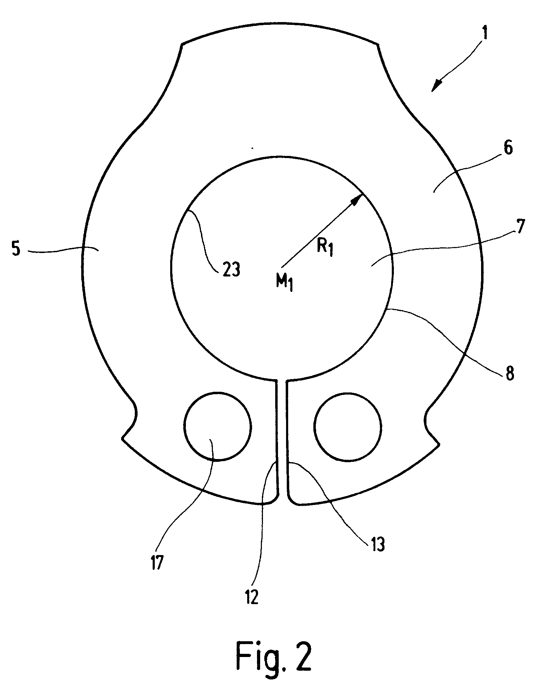

Der Befestigungsring 1 weist eine Ringinnenöffnung 7 auf, die eine Kontur 8 besitzt. Die Kontur 8 erstreckt sich endseitig bis zu einem Schlitz 9, der zwischen den Ringenden 10, 11 ausgebildet ist. Die Schlitzränder 12, 13, die den Ringenden 10, 11 entsprechen, verlaufen zur Symmetrielinie 4 unter einem Winkel α. Dieser Winkel α beträgt 25,42° bei einem Befestigungsring 1, der im montierten Zustand einen Radius R₁ von 10 mm aufweist (vergleiche Figur 2). Auch die nachfolgenden Winkel und Maßangaben gelten für einen derartigen Befestigungsring. Für einen größeren beziehungsweise kleineren erfindungsgemäßen Befestigungsring 1 ist es möglich, deren Maße und Winkel unter Zuhilfenahme der im Zuge der Anmeldung offenbarten Werte entsprechend umzurechnen.

Im an das Ringende 10, 11 anschließenden Bereich 14 ist jeweils ein Werkzeugansetzmittel 15 vorgesehen, das als Durchbruch 16, insbesondere als Kreisloch 17 ausgestaltet ist. Der Bereich 14 weist -zur Anordnung eines Kreislochs 17 mit möglichst großem Durchmesser- eine radiale Erweiterung in Form einer radial nach außen gerichteten Stufe 18 auf. Der Bereich 14 erstreckt sich über einen Winkel β von 45°.

Diametral zum Schlitz 9 gegenüberliegend, weist der Befestigungsring 1 eine weitere, radial nach außen gerichtete Stufe 18' auf, die sich etwa über einen Winkel δ von 60° erstreckt. Die Kontur 8 der Ringinnenöffnung 7 weist bezüglich jeder Ringhälfte 5 und 6 einen ersten Bereich 19 auf, der diametral gegenüberliegend zum Schlitz 9 liegt. An den jeweils ersten Bereich 19 schließt sich ein zweiter Bereich 20 an, der in einen dritten Bereich 21 übergeht, welcher bis zum jeweiligen Ringende 10, 11 hin verläuft. Die Kontur 8 von aneinandergrenzenden Bereichen 19 und 20 sowie 20 und 21 jeder Ringhälfte 5, 6 weist unterschiedlich große Radien R₂, R₃, R₄ auf, die von unterschiedlich liegenden Mittelpunkten M₁, M₂ und M₃ ausgehen. Der Mittelpunkt M₁ der Figur 1 entspricht dem Mittelpunkt M₁ der Ringinnenöffnung 7 im montierten Zustand des Befestigungsrings 1 (siehe auch Figur 2). Er liegt auf der Symmetrielinie 4. Der Radius R₂ beträgt 5 mm. Die Kontur 8 im zweiten Bereich 20 weist den Radius R₃ von 10 mm auf. Der Radius R₃ geht von dem Mittelpunkt M₂ aus. Zum Mittelpunkt M₁ liegt der Mittelpunkt M₂ derart versetzt, daß ein Abstand x₁ von 4,844 mm in Richtung der Längserstreckung der Symmetrielinie 4 besteht und zur Symmetrielinie 4 ferner ein senkrechter Abstand y₁ = 1,239 mm vorliegt. Der Radius R₄ beträgt 5 mm und geht von dem Mittelpunkt M₃ aus, der zum Mittelpunkt M₁ einen in Längserstreckung des Symmetrielinie 4 vorliegenden Abstand x₂ von 1,646 mm aufweist. Der Mittelpunkt M₃ hält zur Symmetrielinie 4 einen senkrechten Abstand von y₂ = 2,597 mm ein. Die minimale Weite des Schlitzes 9 beträgt x₃ = 10,382 mm. Dieser Abstand liegt -in bezug auf die Ringbreite- zwischen den Endpunkten der Kontur 8 vor. Die Schlitzränder 12 und 13 verlaufen geradlinig, wobei eine gedachte Verlängerung der Längserstreckung der Schlitzränder 12 und 13 zu einer durch den Mittelpunkt M₁ verlaufenden, parallelen gedachten Geraden 22 einen Abstand x₄ von 2,149 mm aufweist.

Wird der in der Figur 1 dargestellte Befestigungsring 1 montiert, so ist er hierzu radial einem Bauteil zuzuführen, beispielsweise in eine Ringnut des Bauteils einzubringen. Dieses Zuführen ist aufgrund des Schlitzes 9 möglich. Ist der Befestigungsring 1 radial aufgesteckt, so wird er plastisch verformt, so daß er die Gestalt gemäß Figur 2 erhält. Hierzu wird vorzugsweise eine Seeger-Ring-Zange verwendet, deren stiftförmige Backen in die Kreislöcher 17 der beiden Ringhälften 5 und 6 eingeführt werden. Durch Zusammendrücken der Zange erfolgt ein Umformvorgang, bei dem die beiden Ringenden 10 und 11 aufeinander zu bewegt werden, das heißt, der Befestigungsring 1 wird zusammengedrückt. Die beiden Schlitzränder 12 und 13 weisen nach dem Verformungsvorgang zum Beispiel einen parallelen Verlauf zueinander auf, wobei sie sich mit geringem Abstand gegenüberstehen. Der Verformungsvorgang hat dazu geführt, daß die Kontur 8 der Ringinnenöffnung 7 eine Kreisform 23 angenommen hat. Insofern greift die gesamte Kontur 8 in die genannte Ringnut des Bauteils ein, wodurch eine große Abstützfläche geschaffen ist, die hohe Axialbelastungen schadlos zuläßt. Soll eine Demontage des Befestigungsrings erfolgen, so ist es lediglich erforderlich, mittels der Seeger-Ring-Zange (oder eines anderen Werkzeugs)- den Befestigungsring 1 wieder aufzubiegen, so daß er die Gestalt gemäß Figur 1 einnimmt. Dieses öffnen und Schließen des Rings ist bevorzugt mehrmals möglich, ohne daß es zu einem Materialbruch kommt.

## Patentansprüche

1. Geschlitzter Befestigungsring zur Schaffung einer formschlüssigen Verbindung durch sein bei der Montage beziehungsweise Demontage erfolgendes Zusammendrücken beziehungsweise Spreizen, **dadurch gekennzeichnet,** daß der Befestigungsring (1) aus im wesentlichen nicht federndem, kalt verformbarem Material (3) besteht, und daß die den Schlitz (9) zwischen sich bildenden Ringenden (10,11) -im nicht montierten Zustand des Befestigungsrings (1)-derart weit beabstandet zueinander liegen, daß sie für eine Montage unter plastischer Verformung aufeinander zu gebogen werden können, so daß der Befestigungsring (1) einen geschlossen Zustand erhält, wobei durch den Biegevorgang die Ringinnenöffnung (7) eine kreisförmige beziehungsweise eine etwa kreisförmige Kontur (8) erhält.

2. Befestigungsring nach Anspruch 1, **dadurch gekennzeichnet**, daß im Bereich (14) der Ringenden (10,11) Werkzeugansetzmittel (15) zum Zusammendrücken beziehungsweise Spreizen des Befestigungsrings (1) ausgebildet sind.

3. Befestigungsring nach einem der vorhergehenden Ansprüche, **dadurch gekennzeichnet**, daß die Werkzeugansetzmittel (15) als Durchbrüche (16), insbesondere Kreislöcher (17), ausgebildet sind.

4. Befestigungsring nach einem der vorhergehenden Ansprüche, **dadurch gekennzeichnet**, daß sich die Kontur (8) der Ringinnenöffnung (7) -im nicht montierten Zustand- aus mehreren, ineinander übergehenden beziehungsweise benachbarten Radien (R₂, R₃, R₄) zusammensetzt, wobei aneinandergrenzende Radien (R₂, R₃, R₄) unterschiedlich groß sind und unterschiedlich liegende Mittelpunkte (M₁, M₂, M₃) aufweisen.

5. Befestigungsring nach einem der vorhergehenden Ansprüche, **gekennzeichnet durch** zwei einstückig zusammenhängende Ringhälften (5,6), deren jeweilige Kontur (8) der Ringinnenöffnung (7) im dem Schlitz (9) diametral gegenüberliegenden ersten Bereich (19) des nicht montierten Befestigungsrings (1) einen Radius (R₂) aufweist, der ebenso groß oder etwa ebenso groß ist, wie der Radius (R₁) der Ringinnenöffnung (7) im montierten Zustand des Befestigungsrings (1).

6. Befestigungsring nach Anspruch 5, **dadurch gekennzeichnet**, daß sich -bei jeder Ringhälfte (5,6)- an den ersten Bereich (19) ein zweiter Bereich (20) anschließt, dessen Radius (R₃) der Kontur (8) der Ringinnenöffnung (7) -im nicht montierten Zustanddoppelt beziehungsweise etwa doppelt so groß ist, wie der Radius (R₂) im ersten Bereich (19).

7. Befestigungsring nach Anspruch 5 und/oder 6, **dadurch gekennzeichnet**, daß sich -bei jeder Ringhälfte (5,6)- an den zweiten Bereich (20) ein dritter Bereich (21) anschließt, dessen Radius (R₄) der Kontur (8) der Ringinnenöffnung (7) -im nicht montierten Zustand- so groß beziehungsweise etwa so groß ist, wie der Radius (R₂) im ersten Bereich (19).

8. Befestigungsring nach einem der vorhergehenden Ansprüche, **dadurch gekennzeichnet**, daß die minimale Breite (x₃) des Schlitzes (9) -im nicht montierten Zustand des Befestigungsrings (1)- etwas größer als oder ebenso groß ist wie der doppelte Radius (R₂) der Kontur (8) der Ringinnenöffnung (7) im ersten Bereich (19).

9. Befestigungsring nach einem der vorhergehenden Ansprüche, **gekennzeichnet durch** die Ausbildung als Blechstanzteil (2).
